# FASCICULE DE BREVET EUROPEEN

(11) **EP 3 007 836 B1**
(45) Date de publication et mention de la délivrance du brevet: **16.08.2017**
(21) Numéro de dépôt: 14735865.9
(22) Date de dépôt: 11.06.2014
(51) Int. Cl.: B09B 3/00, F26B 11/12, F26B 25/00, B01D 5/00

(54) **SYSTÈME DE TRAITEMENT DESTINÉ À DÉSHYDRATER DES DÉCHETS ALIMENTAIRES**
VERARBEITUNGSSYSTEM ZUM ENTWÄSSERN VON SPEISERESTEN
PROCESSING SYSTEM INTENDED TO DEHYDRATE FOOD WASTE

(30) Priorité: 13.06.2013 FR 1355487; 27.09.2013 FR 1359330
(43) Date de publication de la demande: 20.04.2016
(73) Titulaire: Société Serveco (SA), 36800 Saint Gaultier (FR)
(72) Inventeur: DROUOT, Louis, 77250 Moret-Sur-Loing (FR); MULLERIS, Jean-Jacques, 92200 Neuilly Sur Seine (FR)
(74) Mandataire: Debay, Yves
(86) Numéro de dépôt international: PCT/EP2014/062164
(87) Numéro de publication internationale: WO 2014/198795

(56) Documents cités:
- WO-A1-2008/089931
- JP-A- 2004 262 720
- JP-A- 2008 284 483
- KR-A- 20110 016 609
- KR-B1- 100 759 795

## Description

### DOMAINE TECHNIQUE DE L'INVENTION

La présente invention se rapporte au domaine des traitements des déchets, et plus particulièrement à un procédé permettant de déshydrater des déchets alimentaires.

### ARRIÈRE-PLAN TECHNOLOGIQUE DE L'INVENTION

Le traitement des déchets alimentaires est un enjeu important pour certains industriels et certains commerces tels que les grandes surfaces.

Les législations demandent maintenant que les déchets produits par ceux-ci soient taxés au poids. La tendance actuelle est donc de réduire le poids de déchets produits.

Plusieurs procédés sont possibles dont des procédés de séchage des déchets.

Le document WO 2009/139514 enseigne un système de séchage de déchets alimentaires. Les déchets alimentaires sont stockés dans un premier réservoir chauffé par un bain d'huile à 80°C et comprenant un dispositif d'agitation des déchets et d'alimentation en air chaud. La vapeur d'eau créée par le chauffage des déchets alimentaires dans le réservoir se mélange à l'air chaud. Ces effluents gazeux sont évacués dans une conduite. Ils passent alors dans un filtre pour atteindre un condenseur à contact indirect. Le condenseur comprend une pluralité de conduites de refroidissement et une pluralité de ventilateurs. Les effluents sont ainsi condensés dans le condenseur pour stocker le condensat obtenu dans un réservoir supplémentaire. Les effluents incondensables sont pompés par une pompe pour être désodorisés puis mélangés à de l'air extérieur et chauffés pour être réintroduits dans le premier réservoir. Le système décrit dans ce document utilise de nombreux dispositifs tels que des filtres, des désodoriseurs, des catalyseurs, etc. Ces dispositifs demandent beaucoup d'entretien avec une maintenance importante. En outre, l'ensemble du système consomme beaucoup d'énergie par rapport à la quantité de déchets traités.

Le document WO 2005/099920 enseigne un système de traitement de déchets alimentaires. Ce dispositif comprend également de multiples dispositifs tels que des filtres, un condenseur, un échangeur de chaleur, un radiateur, un catalyseur, un désodoriseur, un ozoneur, etc. De plus, les températures de fonctionnement du système peuvent aller jusqu' à 800°C dans certaines parties du système. Les hautes températures ainsi que le fonctionnement des nombreux dispositifs utilisés demandent une importante consommation d'énergie et une maintenance importante.

Le document EP 1 821 054 enseigne aussi un système de traitement des déchets alimentaires. Les déchets alimentaires sont stockés dans un réservoir comprenant des moyens d'agitation. Les effluents gazeux sont aspirés par un ventilateur de brassage d'air. Une partie des effluents sont réintroduits dans le réservoir après un passage par un moyen de chauffage. L'autre partie des effluents est aspirée par un ventilateur aspirant après avoir été désodorisé par un désodoriseur et un moyen de chauffage qui chauffe les effluents jusqu'à une température de 350°C. De la même manière que les documents précédents, le système de ce document demande une importante consommation d'énergie même si le nombre de dispositifs est moins important. En outre, la recirculation des effluents dans le réservoir rend le système peu efficace.

Le document JP 2008-284483 enseigne un dispositif pour sécher des déchets. Ce dispositif comprend un réservoir de traitement des déchets, un dispositif de chauffage, une pompe à vide. Un dispositif de refroidissement pour refroidir les gaz générés dans le réservoir et un dispositif séparateur à cyclone pour ôter les composants gazéifiés tels que l'eau et les graisses sont disposés entre le réservoir et la pompe à vide. Ce dispositif nécessite plusieurs systèmes tels qu'un séparateur à cyclone et un dispositif de refroidissement qui demandent un entretien important.

### DESCRIPTION GÉNÉRALE DE L'INVENTION

La présente invention a pour objet d'obtenir un système de traitement de déchets simple, économique et fiable qui pallie l'une ou plusieurs des difficultés évoquées précédemment.

À cet effet, l'invention concerne un système de traitement destiné à déshydrater des déchets alimentaires incluant au moins :
- un dispositif de stockage et de chauffage des déchets alimentaires comprenant au moins un dispositif d'agitation des déchets alimentaires dans un réservoir,
- un condenseur,
- une première conduite permettant la communication directe entre le dispositif de stockage et le condenseur pour permettre le passage des effluents gazeux dont de la vapeur d'eau produits dans le dispositif de stockage et de chauffage par les déchets alimentaires vers le condenseur par échange de chaleur où la vapeur d'eau contenue dans les effluents gazeux se condensent,
l'intérieur du réservoir, l'intérieur de l'enceinte du condenseur et l'intérieur de la première conduite étant maintenus sous vide primaire, le système étant caractérisé en ce que le condenseur est un condenseur par échange de chaleur à contact direct ayant une enceinte comprenant une ouverture d'extraction des gaz incondensables en partie haute du condenseur et une ouverture d'extraction des condensats en partie basse du condenseur.

Selon une autre particularité, le condenseur par échange de chaleur à contact direct est un condenseur à jets comprenant l'enceinte ayant un axe longitudinal perpendiculaire au sol, l'enceinte comprenant, dans la partie haute de l'enceinte, un dispositif de douche comprenant au moins une ouverture d'entrée de liquide de refroidissement permettant au liquide de refroidissement de tomber en douche dans l'enceinte, de la partie haute vers une partie basse, les condensats composés de liquide de refroidissement additionné de la vapeur d'eau condensée par le liquide de refroidissement étant extraits par l'ouverture d'extraction des condensats, la première conduite débouchant dans la partie basse de l'enceinte.

Selon une autre particularité, l'ouverture d'extraction des gaz incondensables du condenseur est connectée à une pompe d'extraction des incondensables et l'ouverture d'extraction des condensats étant connectée à une pompe d'extraction des condensats.

Selon une autre particularité, le dispositif de douche communique avec la partie basse de l'enceinte du condenseur par une deuxième conduite, une partie des condensats étant extraite du la partie basse de l'enceinte par une pompe de recirculation des condensats pour être acheminé au dispositif de douche par cette deuxième conduite.

Selon une autre particularité, le dispositif de stockage et de chauffage des déchets comprend en outre :
- un réservoir destiné à contenir les déchets alimentaires dont la forme est en partie en secteur de cylindre,
- un dispositif de chauffage disposé contre la paroi du réservoir et destiné à chauffer les déchets alimentaires contenus dans le réservoir.

Selon une autre particularité, le dispositif d'agitation comprend au moins :
- un arbre de rotation entrainé par un moteur et parallèle à l'axe longitudinal de la partie en secteur de cylindre du réservoir,
- une pluralité de tiges dont une extrémité est fixée à l'arbre de rotation,
- une pluralité d'ailettes fixées à l'autre extrémité des tiges de telle manière que l'ensemble formé d'une tige et d'une ailette s'étende de l'arbre de rotation jusqu'au voisinage de la paroi du réservoir en secteur de cylindre.

Selon une autre particularité, l'axe longitudinal du réservoir est incliné par rapport au sol et chaque ailette est contenue dans un plan faisant un angle δ avec le plan comprenant l'arbre de rotation et la tige sur laquelle l'ailette est fixée, l'orientation de l'angle δ étant choisie de telle manière que les déchets alimentaires destinés à être traités dans le système soient soulevés dans la direction de l'extrémité de l'arbre de rotation la plus éloignée du sol lors du traitement des déchets alimentaires.

Selon une autre particularité, le dispositif de chauffage comprend des plaques chauffantes appliquées sur la surface extérieure du réservoir, les plaques chauffantes étant régulées en température par une régulation.

Selon une autre particularité, le dispositif de chauffage comprend en outre une pompe à chaleur dont un condenseur spécifique est fixé au réservoir et, dont un évaporateur spécifique est fixé sur l'enceinte du condenseur et/ou sur la deuxième conduite pour récupérer la chaleur de l'enceinte du condenseur et/ou de la deuxième conduite pour la restituer au réservoir.

Selon une autre particularité, le dispositif de chauffage comprend en outre une pompe à chaleur dont un condenseur spécifique est fixé au réservoir et, dont un évaporateur spécifique est à l'intérieur de l'enceinte du condenseur.

Selon une autre particularité, la partie de la première conduite la plus proche de l'enceinte du condenseur fait un angle α aigu avec l'axe longitudinal de l'enceinte.

Selon une autre particularité, le vide primaire est maintenu par la pompe d'extraction des gaz incondensables du condenseur et/ou la pompe d'extraction des condensats.

Selon une autre particularité, le système comprend en outre un capteur d'humidité fixé dans le réservoir, le capteur étant connecté à un moyen de commande, le moyen de commande étant connecté au moteur entrainant l'arbre de rotation, la ou les pompes d'extraction et/ou de recirculation, le dispositif de chauffage et la pompe à chaleur, le moyen de commande arrêtant le moteur de l'arbre de rotation, le dispositif de chauffage, la ou les pompes d'extraction et/ou de recirculation et la pompe à chaleur quand le capteur détecte un taux d'humidité des déchets alimentaires inférieur à une valeur de taux d'humidité minimum dans le réservoir.

Selon une autre particularité, le système comprend au moins un capteur de pression dans le réservoir et/ou dans l'enceinte du condenseur, le ou les capteurs étant connectés au moyen de commande, le moyen de commande étant connecté à au moins une pompe d'extraction, le moyen de commande contrôlant le fonctionnement de la ou des pompes d'extraction pour maintenir le vide primaire du système et/ou évacuer les condensats.

Selon une autre particularité, le réservoir possède une ouverture de décharge dans la partie la plus proche du sol.

Selon une autre particularité, des couteaux sont fixés sur l'arbre de rotation.

L'invention, avec ses caractéristiques et avantages, ressortira plus clairement à la lecture de la description faite en référence aux dessins annexés dans lesquels :
La figure 1 représente une vue schématique du système selon un mode de réalisation.

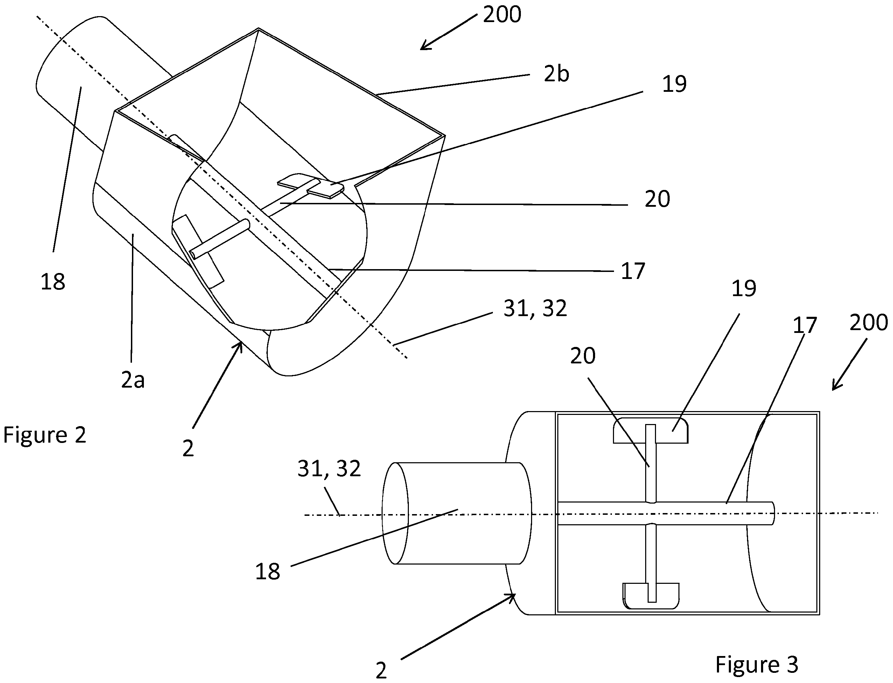

La figure 2 représente un écorché du dispositif de stockage et de chauffage sans le couvercle dans une vue en perspective.
La figure 3 représente une vue du dessus du dispositif de stockage et de chauffage sans le couvercle.

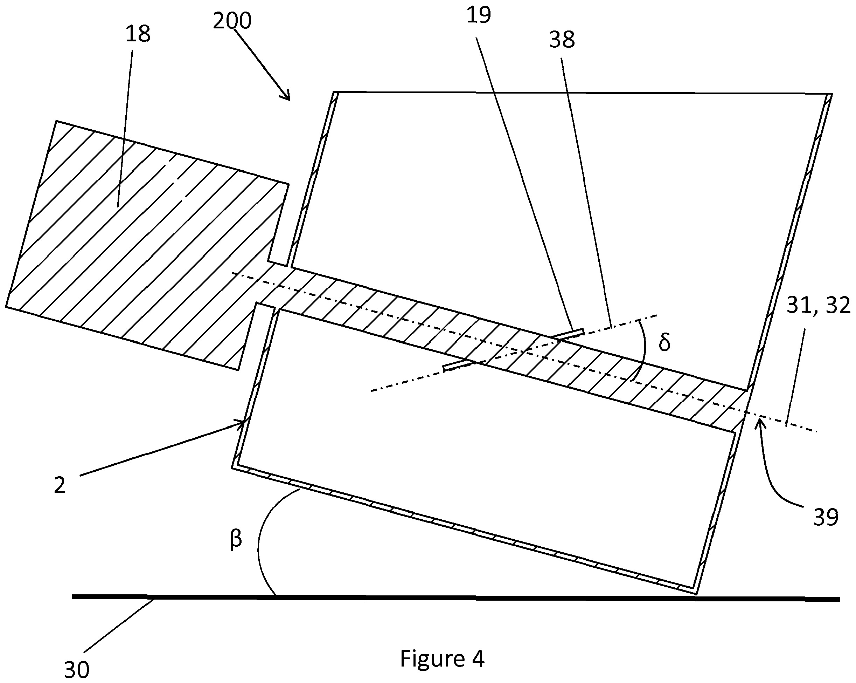

La figure 4 représente une coupe transversale du dispositif de stockage et de chauffage selon l'axe de l'arbre de rotation.
La figure 5 représente une vue schématique du système selon un autre mode de réalisation.

### DESCRIPTION DES MODES DE RÉALISATION PRÉFÉRÉS DE L'INVENTION

La suite de la description fera référence aux figures citées ci-dessus.

L'invention concerne un système (0) destiné à traiter des déchets alimentaires (4).

Les déchets alimentaires (4) peuvent être des déchets rejetés, par exemple et de façon non limitative, par l'industrie alimentaire, des commerces alimentaires, des grandes surfaces ou des restaurants.

Les déchets alimentaires (4) peuvent comprendre des déchets organiques et des déchets non organiques provenant, par exemple, d'emballages d'aliments qui peuvent être en plastique, en verre, en métal, etc.

Le système (0) inclut un dispositif (200) de stockage et de chauffage des déchets alimentaires (4).

Le dispositif (200) de stockage et de chauffage comprend un réservoir (2) dans lequel sont contenus les déchets alimentaires (4) à traiter. Un dispositif d'agitation permet d'agiter les déchets contenus dans le réservoir (2).

Le réservoir (2) a une forme en partie en secteur de cylindre. Le réservoir (2) peut être en acier inoxydable ou en acier noir, ou en tout autre matériau compatible avec les déchets et leur chauffage.

Le dispositif d'agitation comprend un arbre de rotation (17) entrainé par un moteur (18). L'arbre de rotation (17) est parallèle à l'axe (32) longitudinal du cylindre complet dont un secteur forme le réservoir (2). De préférence, l'axe (31) de l'arbre de rotation (17) et l'axe (32) longitudinal du cylindre complet sont confondus. Le moteur (18) qui entraine l'arbre de rotation (17) est situé à l'extérieur du réservoir (2). L'arbre de rotation (17) s'étendant de part en part le réservoir (2) traverse la paroi du réservoir (2) pour être connecté au moteur (18). Des moyens d'étanchéités sont utilisés à l'endroit (21) où l'arbre de rotation (17) traverse la paroi du réservoir (2) afin que les déchets alimentaires (4) ne sortent pas du réservoir (2) lorsqu'ils sont à l'intérieur, notamment les matières liquides contenues dans les déchets alimentaires (4), et pour maintenir un vide primaire.

Le dispositif d'agitation comprend aussi une pluralité de tiges (20) et une pluralité d'ailettes (19). Une extrémité de chaque tige (20) est fixée à l'arbre de rotation (17). Les ailettes (19) sont fixées à l'autre extrémité des tiges (20). L'ensemble formé d'une tige (20) et d'une ailette (19) s'étend de l'arbre de rotation (17) jusqu'au voisinage de la paroi du réservoir (2) en forme de secteur de cylindre. La longueur formée par l'ensemble formé d'une tige (20) et d'une ailette (19) est sensiblement inférieure au rayon du cylindre complet dont un secteur forme le réservoir (2) afin que les ailettes (19) ne frottent pas sur la paroi interne de la partie en forme de secteur de cylindre du réservoir (2).

L'arbre de rotation (17) tourne avec une vitesse de rotation lente. La vitesse de rotation de l'arbre de rotation (17) du dispositif d'agitation est égale, par exemple, à environ 7,5 tr/min.

Le dispositif (200) de stockage et de chauffage comprend en outre un dispositif de chauffage (11) destiné à chauffer les déchets alimentaires (4) dans le réservoir (2) pour permettre l'extraction d'eau des déchets sous la forme de vapeur d'eau. Le dispositif de chauffage (11) des déchets peut être réglé entre 50°C et 100°C. Une température préférée des déchets peut être égale à 80°C. Dans ce cas le dispositif de chauffage (11) peut être réglé de préférence sur 100°C, pour tenir compte du gradient de chaleur dans les parois du réservoir (2).

Le dispositif de chauffage (11) peut être disposé en bas du réservoir (2). Le dispositif de chauffage (11) peut comprendre des plaques de chauffages (11 a) ou un restituteur de chaleur (11 b) extraite d'une pompe à chaleur (6) ou bien une combinaison des plaques chauffantes (11a) et du restituteur de chaleur (11 b).

Les plaques chauffantes (11a) du dispositif de chauffage (11) fournissent de la chaleur (25a) au réservoir (2). Elles peuvent être des plaques chauffantes souples appliquées sur la surface externe du réservoir (2), de préférence sur la partie inférieure de secteur de cylindre. Ces plaques chauffantes présentent dans leur structure au moins un élément électrique formant une résistance chauffante noyée dans un matériau souple à la fois thermiquement conducteur et électriquement isolant qui peut être en silicone ou tout autre polymère, tel que de l'élastomère, présentant des propriétés similaires. Cette résistance électrique chauffante est alimentée par au moins un moyen d'alimentation électrique afin de lui permettre de fournir une puissance comprise entre 100 W et 10000 W selon le volume du réservoir à chauffer. Selon un mode de réalisation, les plaques chauffantes utilisées sont régulées en température et/ou alimentées en tout ou rien.

Le restituteur de chaleur (11 b) du dispositif de chauffage (11) peut être un condenseur spécifique connecté à une pompe à chaleur (6). La pompe à chaleur (6) est, d'une part, connectée au réservoir (2) et, d'autre part, connectée à au moins un récupérateur de chaleur (7, 8) tel qu'un évaporateur spécifique fixé sur l'enceinte (35) du condenseur (34) et/ou sur la deuxième conduite (5) pour récupérer (23, 24) la chaleur de l'enceinte (35) et/ou de la deuxième conduite (5), puis la restituer (25b) à plus haute température au réservoir (2) par le condenseur spécifique (11 b) de la pompe à chaleur. Cette pompe à chaleur peut par exemple être de type à cycle de gaz carbonique supercritique. Le choix de ce cycle permet d'être compatible avec une température d'évaporateur spécifique (7, 8) préférée de 15°C, par exemple, et une température de condenseur spécifique (11b) préférée de 100°C par exemple, au contact de la paroi du réservoir (2). Le condenseur spécifique de la pompe à chaleur (6) est fixé contre le réservoir (2) à sa partie inférieure, à la place ou à côté des plaques chauffantes souples précédentes.

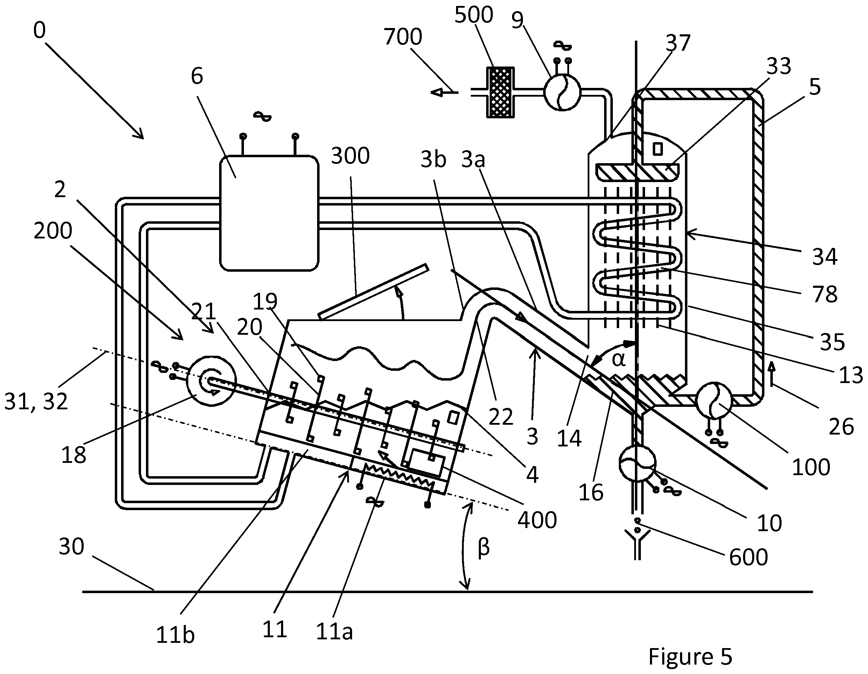

Dans un autre mode de réalisation représenté sur la figure 5, le récupérateur de chaleur (78) est à l'intérieur de l'enceinte (35) du condenseur (34) pour récupérer la chaleur de l'intérieur de l'enceinte (35), puis la restituer (25b) à plus haute température au réservoir (2) par le condenseur spécifique (11 b) de la pompe à chaleur. Cette configuration permet d'améliorer le taux de récupération de chaleur et ainsi améliorer le rendement du système. Le récupérateur de chaleur (78), tel qu'un évaporateur spécifique peut être sous la forme d'une conduite en serpentin.

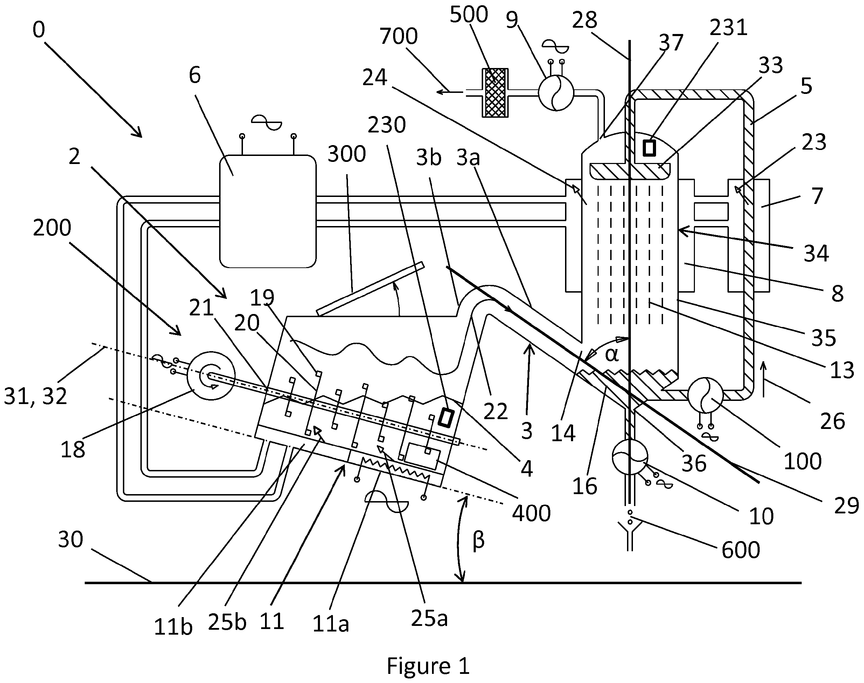

Selon un mode de réalisation préféré du dispositif (200) de stockage et de chauffage représentée sur la figure 1, la partie (2a) en secteur de cylindre du réservoir (2) est un demi-cylindre dont l'axe (32) longitudinal est incliné par rapport au sol (30) d'un angle β, préférentiellement compris dans un intervalle entre 0° et 30°, encore préférentiellement égal à 15°. Dans ce mode de réalisation, le réservoir (2) peut comprendre également une partie (2b) surmontant la partie (2a) demi-cylindrique ayant une forme de prisme droit dont la base est un trapèze rectangle. L'angle que font les droites opposées non parallèles du trapèze est égal à β. L'ensemble comprenant la partie (2a) demi-cylindrique et la partie (2b) formant un prisme droit forme le réservoir (2). Le réservoir (2) est fermé par un couvercle (300) sur la face supérieure de la partie (2b) ayant une forme de prisme droit opposé à la partie demi-cylindrique. Le couvercle peut être ouvert, par exemple, pour charger les déchets alimentaires (4) dans le réservoir (2). Le couvercle peut être fermé, par exemple, lors du fonctionnement du système (0).

Dans ce mode de réalisation, chaque ailette (19) est contenue dans un plan (38) faisant un angle δ avec le plan (39) comprenant l'arbre de rotation (17) et la tige (20) sur laquelle l'ailette (19) est fixée. L'angle δ est, par exemple, préférentiellement compris entre 0° et 60°, encore préférentiellement égal à 30°. L'angle δ peut être en général égal à l'angle β. L'orientation de l'angle δ est choisie de telle manière que les déchets alimentaires (4) destinés à être traités dans le système (0) soient soulevés dans la direction de l'extrémité (21) de l'arbre de rotation (17) la plus éloignée du sol (30) lors du traitement des déchets alimentaires (4) lors du fonctionnement du système (0) pour le traitement des déchets alimentaires (4). Ceci permet d'éviter que les déchets alimentaires (4) ne restent accumulés dans la partie du réservoir (2) la plus proche du sol (30) par la gravité, ce qui rendrait le fonctionnement du dispositif d'agitation inefficace.

Dans ce mode de réalisation, le moteur (18) entrainant l'arbre de rotation (17) est placé à l'extrémité de l'arbre de rotation (17) la plus éloignée du sol.

L'inclinaison de l'axe (31) longitudinal de la partie (2a) demi-cylindrique de ce mode de réalisation permet que les déchets alimentaires (4) n'atteignent pas les moyens d'étanchéité utilisés à l'endroit (21) où l'arbre de rotation (17) traverse la paroi du réservoir (2). En effet, les déchets alimentaires (4) peuvent endommager les moyens d'étanchéité par des réactions chimiques ou physiques se produisant lors du traitement des déchets alimentaires (4).

Pour tous les modes de réalisation du dispositif (200) de stockage et de chauffage, le réservoir (2) peut posséder une ouverture de décharge (400) dans la partie la plus proche du sol du secteur de cylindre. Cette ouverture de décharge (400) est normalement fermée pendant le séchage des déchets, elle est ouverte pour le déchargement des déchets séchés.

Dans ce mode de réalisation, l'arbre de rotation (17) du dispositif d'agitation tourne dans un sens de rotation permettant aux déchets alimentaires (4) d'être soulevés grâce à l'angle δ que font les ailettes (19) avec le plan (39) comprenant l'arbre de rotation (17) et la tige (20) sur laquelle l'ailette (19) est fixée. Dans un sens de rotation opposé de l'arbre de rotation (17), le reliquat des déchets alimentaires (4) séchés après le traitement peut être déchargé facilement par l'ouverture de décharge (400) grâce aux ailettes (19) du dispositif d'agitation qui poussent le reliquat vers l'ouverture de décharge.

L'arbre de rotation (17) peut comprendre en outre des couteaux fixés sur l'arbre de rotation (17). Ces couteaux permettent de déchiqueter les éléments contenus dans les déchets alimentaires (4) susceptibles de s'enrouler autour de l'arbre de rotation (17), ce qui nuit au fonctionnement du dispositif d'agitation en bloquant ou en ralentissant la rotation de l'arbre de rotation (17). Les éléments contenus dans les déchets alimentaires (4) susceptibles de s'enrouler autour de l'arbre de rotation (17) peuvent être par exemple des éléments en plastiques tels que des emballages en plastique, les films plastiques ou des sacs en plastiques.

Le système (0) destiné à traiter des déchets alimentaires (4) inclut en outre un condenseur (34) de vapeur d'eau par échange de chaleur à contact direct. Un échange de chaleur à contact direct est un échange dans lequel aucune séparation matérielle n'existe entre deux fluides qui s'échangent leurs chaleurs.

Le condenseur (34) par échange à contact direct peut être un condenseur à jets dans lequel le liquide de refroidissement, par exemple de l'eau froide, entre en contact direct avec la vapeur d'eau contenue dans les effluents gazeux (22) produits par les déchets alimentaires (4) qui se trouve alors condensée au contact de ce liquide. La température du liquide de refroidissement est supérieure à 0°C et inférieure à 30°C. Elle est préférentiellement de 15°C, par exemple.

Ce condenseur à jets comprend une enceinte (35) ayant un axe (28) longitudinal sensiblement perpendiculaire au sol (30). L'axe (28) longitudinal de l'enceinte (35) peut avoir un angle inférieur à 5° par rapport à la verticale. Les éléments du condenseur à jets peuvent être en acier inoxydable ou un acier noir, ou tout autre matériau compatible avec les températures et pressions dans le condenseur, par exemple du PVC haute-température.

Dans une partie supérieure de l'enceinte (35), un dispositif (33) de douche comprenant au moins une ouverture d'entrée de liquide (16) de refroidissement permet au liquide (16) de refroidissement de tomber en douche (13) dans l'enceinte (35) de la partie supérieure vers une partie inférieure.

L'enceinte (35) comprend, en outre, dans la partie inférieure, une ouverture (36) d'extraction du condensat (600) composé de liquide (16) de refroidissement et de vapeur d'eau des effluents gazeux (22) condensée par le liquide (16) de refroidissement.

Le dispositif (33) de douche peut communiquer avec la partie basse de l'enceinte (35) du condenseur (34). Une partie des condensats est extraite du la partie basse de l'enceinte (35) par une pompe (100) de recirculation des condensats pour être acheminé au dispositif (33) de douche.

L'enceinte (35) comprend, en outre, dans la partie supérieure une ouverture (37) d'extraction des gaz incondensables (700) contenus dans les effluents gazeux (22), qui sont extraits par une pompe (9) d'extraction des incondensables.

L'ouverture (37) d'extraction de gaz incondensables peut en outre comprendre un filtre à charbon actif (500) pour désodoriser les gaz incondensables ou un système de barbotage couplé à un filtre à charbon actif. Un pot catalytique peut aussi être utilisé pour la désodorisation.

Le système (0) destiné à traiter des déchets alimentaires (4) inclut en outre une première conduite (3) permettant la communication directe entre le dispositif (200) de stockage, plus particulièrement le réservoir (2), et le condenseur (34) pour permettre le passage des effluents gazeux (22) composés de la vapeur d'eau et des gaz incondensables produits par le chauffage des déchets alimentaires (4) dans le réservoir (2), vers le condenseur (34) à échange de chaleur par contact direct. La première conduite (3) peut être en acier inoxydable ou un acier noir, ou tout autre matériau compatible avec les niveaux de température et de pression, par exemple du PVC Haute-température.

Cette première conduite (3) débouche dans la partie inférieure de l'enceinte (35) par une ouverture (14) d'introduction des gaz. Une première partie (3a) de la première conduite (3), la plus proche de l'enceinte (35), possède un axe (29) longitudinal qui fait un angle aigu α avec l'axe (28) longitudinal de l'enceinte (35) du condenseur (34) en formant, par exemple, un coude entre l'enceinte (35) du condenseur (34) et la première conduite (3). L'angle aigu α peut être compris dans un intervalle compris, par exemple, entre 30° et 60°. L'extrémité de la première partie (3a) de la première conduite (3) opposée à l'extrémité fixée sur l'enceinte (35) du condenseur (34) s'étend en s'éloignant du sol (30) jusqu'à ce qu'elle atteigne une hauteur supérieure à la hauteur de l'ouverture (14) d'introduction des effluents gazeux (22). Cette extrémité rejoint alors une deuxième partie (3b) de la deuxième conduite qui connecte la première conduite (3) au réservoir (2) du dispositif (200) de stockage et de chauffage des déchets.

L'intérieur de l'enceinte (35) du condenseur (34), l'intérieur du réservoir (2) et la première conduite (3) sont étanches à l'air et maintenus dans un vide primaire, par exemple, entre 1 bar et 0,001 bar, de préférence à 0,7 bar. Le vide primaire dans le système (0) permet, entre autres, de contenir les mauvaises odeurs dans le système (0). Cette étanchéité permet également d'interdire l'entrée d'air extérieur afin d'éviter des oxydations non voulues des éléments du système (0). Le vide primaire permet enfin de réduire la température d'évaporation de l'eau contenue dans les déchets en dessous de 100°C, ce qui économise l'énergie de chauffage.

Les condensats d'eau rassemblés en bas de l'enceinte (35) sont extraits par au moins une pompe (10) d'extraction de condensats.

Dans une variante de réalisation, cette pompe (10) d'extraction de condensats est, par exemple, couplée sur le même arbre que la pompe (9) d'extraction des incondensables.

Dans une autre variante de réalisation, les pompes (9) et (10) sont confondues. Dans cette autre variante de réalisation, la pompe (9) d'extraction des incondensables est une pompe à anneau liquide. Ainsi, les condensats extraits et rassemblés en bas de l'enceinte (35) du condenseur servent à l'anneau liquide à la pompe (9) d'extraction des incondensables.

Dans une autre variante, la pompe (100) de recirculation des condensats et du liquide de refroidissement peut être couplée avec la pompe (9) d'extraction des incondensables et/ou la pompe (10) d'extraction des condensats.

Le système (0) peut comprendre en outre un capteur (230) d'humidité fixé dans le réservoir (2). Ce capteur (230) peut être connecté à un moyen de commande connecté au moins au moteur (18) entrainant l'arbre de rotation (17). Le moyen de commande peut aussi être connecté au moins à la ou les pompes (9, 10, 100) d'extraction et/ou de recirculation, au dispositif de chauffage (11a) et/ou à la pompe à chaleur (6), Le moyen de commande arrête le moteur (18) de l'arbre de rotation (17) et l'ensemble du système (0) quand le capteur (230) détecte un taux d'humidité inférieur à une valeur de taux d'humidité minimum, compris par exemple entre 10% et 20% d'humidité, des déchets alimentaires (4) dans le réservoir (2). On entend par arrêt de l'ensemble du système (0), l'ensemble des éléments comprenant l'arbre de rotation (17), la pompe (9) d'extraction des incondensables, la pompe (10) d'extraction des condensats, la pompe (100) de recirculation, le dispositif (11) de chauffage et la pompe (6) à chaleur.

Le système (0) peut comprendre au moins un capteur (231) de pression dans le réservoir (2) et/ou dans l'enceinte (35) du condenseur (34). Le ou les capteurs (231) peuvent être connectés au moyen de commande. Le moyen de commande est connecté à au moins la pompe (9) d'extraction des incondensables. Le moyen de commande contrôle ainsi le fonctionnement de la pompe (9) d'extraction des incondensables pour maintenir le vide primaire du système (0).

Le vide primaire peut être maintenu par au moins la pompe (9) d'extraction des incondensables. La pompe (10) d'extraction des condensats peut également participer au maintient du vide primaire.

Le système (0) selon l'invention permet de traiter des déchets alimentaires (4) par déshydratation.

L'utilisateur du système (0) ouvre le couvercle (300) du réservoir (2) pour charger des déchets alimentaires (4) dans le réservoir (2) puis ferme le couvercle.

Un vide primaire est réalisé dans le système (0) après la fermeture du couvercle par mise en route des pompes (9) et (10) d'extraction. La pompe de recirculation (100) est mise en route pour aspirer le liquide de refroidissement vers le dispositif (33) de douche.

Le dispositif d'agitation et le dispositif de chauffage du dispositif de stockage et de chauffage se mettent en fonctionnement.

Les gaz incondensables par exemple de l'air, éventuellement présents au démarrage dans l'enceinte (35) du condenseur sont évacués par la pompe (9) d'extraction des incondensables. La température et la pression dans l'enceinte (35) du condenseur (34) sont alors inférieures à la température et à la pression à l'intérieur du réservoir (2). Ceci crée une dépression qui permet aux effluents gazeux (22) comprenant notamment la vapeur d'eau, produits par le chauffage des déchets dans le réservoir (2) d'être aspirés vers l'intérieur de l'enceinte (35) du condenseur (34) en passant par la première conduite (3).

Le liquide (16) de refroidissement qui tombe en douche (13) condense par contact direct la vapeur d'eau contenue dans les effluents gazeux (22) produits par les déchets alimentaires (4), puis tombe dans la partie inférieure de l'enceinte (35) du condenseur (34). L'éventuelle fraction de gaz incondensables est évacuée par l'ouverture (37) d'extraction des gaz incondensables. Les condensats mélangés au liquide (16) de refroidissement par exemple de l'eau sont évacués par l'ouverture (36) d'extraction des condensats. Une partie des condensats mélangés au liquide (16) de refroidissement, contenus dans la partie basse de l'enceinte (35) du condenseur (34), est remise en circulation dans le dispositif (33) de douche grâce à la pompe (100) de recirculation des condensats.

Il peut arriver que le débit de la pompe (10) d'extraction des condensats ne soit pas suffisant pour pouvoir évacuer l'ensemble des liquides comprenant la vapeur d'eau qui a été condensée et le liquide (16) de refroidissement. L'ensemble des liquides contenu dans la partie basse de l'enceinte (35) du condenseur (34) voit alors son niveau monter dans l'enceinte (35) du condenseur (34) mais également dans la première conduite (3) qui forme un angle α avec l'axe (28) longitudinal de l'enceinte (35) du condenseur (34). Cet angle α permet à l'ensemble des liquides de ne pas remonter vers le réservoir (2). De plus, lorsque le niveau des liquides monte dans l'enceinte (35) du condenseur (34), ceci a pour effet de réduire la section de l'ouverture (14) d'introduction des effluents gazeux (22) vers le condenseur (34). En conséquence, le débit d'aspiration des effluents gazeux (22) produits par les déchets alimentaires (4) diminue. Ceci a pour effet de ralentir le fonctionnement du système (0) jusqu'à ce que l'ensemble des liquides soient suffisamment évacués pour que l'aspiration puisse de nouveau augmenter par diminution du niveau des liquides dans l'enceinte (35) et donc augmentation de la section de l'ouverture d'aspiration (14). Cette disposition géométrique de la première conduite (3) permet ainsi de contrôler automatiquement le débit des effluents gazeux (22) aspirés du réservoir (2) vers l'enceinte (35) du condenseur (34) par construction, sans avoir besoin d'un moyen de commande, par exemple électronique.

Pendant le fonctionnement du système (0), la pompe à chaleur (6) peut restituer (25b) de la chaleur à plus haute température au réservoir (2) grâce au condenseur spécifique (11 b), la chaleur (23, 24) à plus basse température étant récupérée par les évaporateurs spécifiques (7, 8) récupérateurs de chaleur fixés sur l'enceinte (35) du condenseur (34) et/ou sur la deuxième conduite (5). La consommation d'énergie du système peut ainsi être réduite, par exemple en proportion du coefficient de performance de la pompe à chaleur (6).

Des moyens de contrôle électronique peuvent être utilisés pour contrôler les éléments actifs, mécaniques ou électriques du système (0) tels que les pompes (9, 10, 100), la pompe à chaleur (6), le moteur (18) du dispositif d'agitation, la résistance de chauffage (11a). Ce contrôle peut être décidé en fonction des données récupérées par le capteur (230) d'humidité et/ou le capteur (231) de pression, ainsi que d'autres capteurs par exemple de température.

Le système (0) selon l'invention est un système (0) efficace avec un nombre d'éléments et de pièces peu nombreuses. Le système (0) permet également de réduire le nombre d'éléments contrôlés par des moyens de contrôle électroniques qui sont des sources de panne importante. Ces éléments sont remplacés par des formes de construction du système (0) et par l'utilisation de phénomènes physiques qui ne peuvent pas tomber en panne. De plus, ce système (0) permet d'économiser de grandes quantités d'énergie, par exemple, de chauffage.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Système (0) de traitement destiné à déshydrater des déchets alimentaires (4) incluant au moins :
- un dispositif (200) de stockage et de chauffage des déchets alimentaires (4) comprenant au moins un dispositif d'agitation des déchets alimentaires (4) dans un réservoir (2),
- un condenseur (34),
- une première conduite (3) permettant la communication directe entre le dispositif (200) de stockage et le condenseur (34) pour permettre le passage des effluents gazeux (22) dont de la vapeur d'eau produits dans le dispositif (200) de stockage et de chauffage par les déchets alimentaires (4) vers le condenseur (34) où la vapeur d'eau contenue dans les effluents gazeux se condensent,
l'intérieur du réservoir (2), l'intérieur de l'enceinte (35) du condenseur (34) et l'intérieur de la première conduite (3) sont maintenus sous vide primaire, le système (0) étant **caractérisé en ce que** le condenseur (34) est un condenseur (34) par échange de chaleur à contact direct ayant une enceinte (35) comprenant une ouverture (37) d'extraction des gaz incondensables en partie haute du condenseur (34) et une ouverture (36) d'extraction des condensats en partie basse du condenseur (34).

2. Système (0) selon la revendication 1, **caractérisé en ce que** le condenseur (34) par échange de chaleur à contact direct est un condenseur (34) à jets comprenant l'enceinte (35) ayant un axe (28) longitudinal perpendiculaire au sol (30), l'enceinte (35) comprenant, dans la partie haute de l'enceinte (35), un dispositif (33) de douche comprenant au moins une ouverture d'entrée de liquide (16) de refroidissement permettant au liquide (16) de refroidissement de tomber en douche (13) dans l'enceinte (35), de la partie haute vers une partie basse, les condensats composés de liquide (16) de refroidissement additionné de la vapeur d'eau condensée par le liquide (16) de refroidissement étant extraits par l'ouverture d'extraction des condensats, la première conduite (3) débouchant dans la partie basse de l'enceinte (35).

3. Système (0) selon l'une des revendications 1 et 2, **caractérisé en ce que** l'ouverture (37) d'extraction des gaz incondensables du condenseur (34) est connectée à une pompe (9) d'extraction des incondensables et l'ouverture (36) d'extraction des condensats étant connectée à une pompe (10) d'extraction des condensats.

4. Système (0) selon la revendication 2, **caractérisé en ce que** le dispositif (33) de douche communique avec la partie basse de l'enceinte (35) du condenseur (34) par une deuxième conduite (5), une partie des condensats étant extraite de la partie basse de l'enceinte (34) par une pompe (100) de recirculation des condensats pour être acheminé au dispositif (33) de douche par cette deuxième conduite (5).

5. Système (0) selon la revendication 1, **caractérisé en ce que** le dispositif (200) de stockage et de chauffage des déchets comprend en outre :
- un réservoir (2) destiné à contenir les déchets alimentaires (4) dont la forme est en partie (2a) en secteur de cylindre,
- un dispositif de chauffage (11) disposé contre la paroi du réservoir (2) et destiné à chauffer les déchets alimentaires (4) contenus dans le réservoir (2).

6. Système (0) selon la revendication 5, **caractérisé en ce que** le dispositif d'agitation comprend au moins :
- un arbre de rotation (17) entrainé par un moteur (18) et parallèle à l'axe (32) longitudinal de la partie (2a) en secteur de cylindre du réservoir (2),
- une pluralité de tiges (20) dont une extrémité est fixée à l'arbre de rotation (17),
- une pluralité d'ailettes (19) fixées à l'autre extrémité des tiges (20) de telle manière que l'ensemble formé d'une tige (20) et d'une ailette (19) s'étende de l'arbre de rotation (17) jusqu'au voisinage de la paroi du réservoir (2) en secteur de cylindre.

7. Système (0) selon la revendication 6, **caractérisé en ce que**
- l'axe (32) longitudinal du réservoir (2) est incliné par rapport au sol (30) et **en ce que**
- chaque ailette (19) est contenue dans un plan (38) faisant un angle δ avec le plan (39) comprenant l'arbre de rotation (17) et la tige (20) sur laquelle l'ailette (19) est fixée, l'orientation de l'angle δ étant choisie de telle manière que les déchets alimentaires (4) destinés à être traités dans le système (0) soient soulevés dans la direction de l'extrémité de l'arbre de rotation (17) la plus éloignée du sol (30) lors du traitement des déchets alimentaires (4).

8. Système (0) selon l'une des revendications 1 à 7, **caractérisé en ce que** le dispositif de chauffage comprend des plaques chauffantes (11a) appliquées sur la surface extérieure du réservoir (2), les plaques chauffantes étant régulées en température par une régulation.

9. Système (0) selon l'une des revendications 1 à 8, **caractérisé en ce que** le dispositif de chauffage comprend en outre une pompe à chaleur (6) dont un condenseur spécifique (11 b) est fixé au réservoir (2) et, dont un évaporateur spécifique (7, 8) est fixé sur l'enceinte (35) du condenseur (34) et/ou sur la deuxième conduite (5) pour récupérer (23, 24) la chaleur de l'enceinte (35) du condenseur (34) et/ou de la deuxième conduite (5) pour la restituer (25b) au réservoir (2).

10. Système (0) selon l'une des revendications 1 à 8, **caractérisé en ce que** le dispositif de chauffage comprend en outre une pompe à chaleur (6) dont un condenseur spécifique (11 b) est fixé au réservoir (2) et, dont un évaporateur spécifique (78) est à l'intérieur de l'enceinte (35) du condenseur (34).

11. Système (0) selon l'une des revendications 1 à 10, **caractérisé en ce que** la partie (3a) de la première conduite (3) la plus proche de l'enceinte (35) du condenseur (34) fait un angle α aigu avec l'axe (28) longitudinal de l'enceinte (35).

12. Système (0) selon au moins la revendication 1, **caractérisé en ce que** le vide primaire est maintenu par la pompe (9) d'extraction des gaz incondensables du condenseur (34) et/ou la pompe (10) d'extraction des condensats.

13. Système (0) selon l'une des revendications 1 à 12, **caractérisé en ce que** le système (0) comprend en outre un capteur d'humidité (230) fixé dans le réservoir (2), le capteur étant connecté à un moyen de commande, le moyen de commande étant connecté au moteur (18) entrainant l'arbre de rotation (17), la ou les pompes (9, 10, 100) d'extraction et/ou de recirculation, le dispositif de chauffage (11a) et la pompe à chaleur (6), le moyen de commande arrêtant le moteur (18) de l'arbre de rotation (17), le dispositif de chauffage (11a), la ou les pompes (9, 10, 100) d'extraction et/ou de recirculation et la pompe à chaleur (6) quand le capteur détecte un taux d'humidité des déchets alimentaires (4) inférieur à une valeur de taux d'humidité minimum dans le réservoir (2).

14. Système (0) selon l'une des revendications 1 à 13, **caractérisé en ce que** le système (0) comprend au moins un capteur (231) de pression dans le réservoir (2) et/ou dans l'enceinte (35) du condenseur (34), le ou les capteurs (231) étant connectés au moyen de commande, le moyen de commande étant connecté à au moins une pompe d'extraction, le moyen de commande contrôlant le fonctionnement de la ou des pompes (9, 10) d'extraction pour maintenir le vide primaire du système (0) et/ou évacuer les condensats (16).

15. Système (0) selon l'une des revendications 1 à 14, **caractérisé en ce que** le réservoir (2) possède une ouverture (400) de décharge dans la partie la plus proche du sol (30).

16. Système (0) selon l'une des revendications 1 à 15, **caractérisé en ce que** des couteaux sont fixés sur l'arbre de rotation (17).

## Patentansprüche

1. Behandlungssystem (0) zum Entwässern von Lebensmittelabfällen (4), mindestens umfassend:
- eine Vorrichtung zum Lagern und Erhitzen (200) der Lebensmittelabfälle (4), mindestens umfassend eine Rührvorrichtung der Lebensmittelabfälle (4) in einem Behälter (2),
- einen Verflüssiger (34),
- eine erste Rohrleitung (3), die eine direkte Verbindung zwischen der Vorrichtung zum Lagern (200) und dem Verflüssiger (34) erlaubt, um den Durchgang von Abgasen (22), darunter Wasserdampf, die in der Vorrichtung zum Lagern und Erhitzen (200) durch die Lebensmittelabfälle (4) erzeugt werden, zum Verflüssiger (34) zu erlauben, wo der in den Abgasen enthaltene Wasserdampf kondensiert,
wobei das Innere des Behälters (2), das Innere der Umhüllung (35) des Verflüssigers (34) und das Innere der ersten Rohrleitung (3) unter Grobvakuum gehalten werden, wobei das System (0) **dadurch gekennzeichnet ist, dass** der Verflüssiger (34) ein Direktkontakt-Wärmeaustausch-Verflüssiger (34) mit einer Umhüllung (35) ist, die eine Austragsöffnung (37) für nichtkondensierbare Gase im oberen Bereich des Verflüssigers (34) und eine Austragsöffnung (36) für die Kondensate im unteren Teil des Verflüssigers (34) umfasst.

2. System (0) nach Anspruch 1, **dadurch gekennzeichnet, dass** der Direktkontakt-Wärmeaustausch-Verflüssiger (34) ein Einspritzkondensator (34) ist, der eine Umhüllung (35) mit einer Längsachse (28) senkrecht zum Fußboden (30) umfasst, wobei die Umhüllung (35) im oberen Teil der Umhüllung (35) eine Duschvorrichtung (33) umfasst, die mindestens eine Eintrittsöffnung für Kühlflüssigkeit (16) umfasst, die der Kühlflüssigkeit (16) erlaubt, in der Umhüllung (35) in Form einer Dusche (13) von einem oberen Bereich zu einem unteren Bereich zu fallen, wobei die Kondensate, die aus Kühlflüssigkeit (16) und zusätzlich dem durch die Kühlflüssigkeit (16) kondensierten Wasserdampf bestehen, durch dieAustragsöffnung für Kondensateausgetragen werden, wobei die erste Rohrleitung (3) in den unteren Teil der Umhüllung (35) mündet.

3. System (0) nach einem der Ansprüche 1 und 2, **dadurch gekennzeichnet, dass** die Austragsöffnung (37) für nichtkondensierbare Gase des Verflüssigers (34) mit einer Austragspumpe (9) für nichtKondensierbares verbunden ist und die Austragsöffnung (36) für Kondensate mit einer Austragspumpe für Kondensate (10) verbunden ist.

4. System (0) nach Anspruch 2, **dadurch gekennzeichnet, dass** die Duschvorrichtung (33) mit dem unteren Teil der Umhüllung (35) des Verflüssigers (34) durch eine zweite Rohrleitung (5) verbunden ist, wobei ein Teil der Kondensate aus dem unteren Teil der Umhüllung (34) durch eine Umwälzpumpe für Kondensate (100) ausgetragen wird, um über diese zweite Rohrleitung (5) zur Duschvorrichtung (33) geführt zu werden.

5. System (0) nach Anspruch 1, **dadurch gekennzeichnet, dass** die Vorrichtung zum Lagern und Erhitzen (200) der Abfälle des Weiteren Folgendes umfasst:
- einen Behälter (2), der die Lebensmittelabfälle (4) aufnehmen soll und dessen Form teilweise (2a) einen Zylindersektor aufweist,
- eine Heizvorrichtung (11), die gegen die Wand des Behälters (2) vorgesehen ist und die in diesem Behälter (2) enthaltenen Lebensmittelabfälle (4) erhitzen soll.

6. System (0) nach Anspruch 5, **dadurch gekennzeichnet, dass** die Rührvorrichtung mindestens Folgendes umfasst:
- eine Drehwelle (17), die durch einen Motor (18) angetrieben wird und parallel zur Längsachse (32) in dem Zylindersektor-Abschnitt (2a) des Behälters (2) verläuft,
- eine Vielzahl von Schäften (20), die mit einem Ende an der Drehwelle (17) befestigt sind,
- eine Vielzahl von Flügeln (19), die am anderen Ende der Schäfte (20) auf eine Weise befestigt sind, dass das Gebilde aus einem Schaft (20) und einem Flügel (19) sich von der Drehwelle (17) bis nahe an die Wand des zylinderförmigen Behälters (2) erstreckt.

7. System (0) nach Anspruch 6, **dadurch gekennzeichnet, dass**:
- die Längsachse (32) des Behälters (2) bezogen auf den Fußboden (30) geneigt ist, und
- jeder Flügel (19) in einer Ebene (38) enthalten ist, die mit der Ebene (39), die die Drehwelle (17) und den Schaft (20) umfasst, an dem der Flügel (19) befestigt ist, einen Winkel δ bildet, wobei die Orientierung des Winkels δ so gewählt ist, dass bei der Behandlung der Lebensmittelabfälle (4) die Lebensmittelabfälle (4), die in dem System (0) behandelt werden sollen, in Richtung des am weitesten vom Fußboden (30) entfernten Endes der Drehwelle (17) angehoben werden.

8. System (0) nach einem der Ansprüche 1 bis 7, **dadurch gekennzeichnet, dass** die Heizvorrichtung Heizplatten (11a) umfasst, die auf der äußeren Oberfläche des Behälters (2) angebracht sind, wobei die Temperatur der Heizplatten durch einen Regler reguliert wird.

9. System (0) nach einem der Ansprüche 1 bis 8, **dadurch gekennzeichnet, dass** die Heizvorrichtung des Weiteren eine Wärmepumpe (6) umfasst, wobei ein spezifischer Verflüssiger (11 b) am Reservoir (2) befestigt ist und ein spezifischer Verdampfer (7, 8) an der Umhüllung (35) des Verflüssigers (34) und/oder auf der zweiten Rohrleitung (5) befestigt ist, um die Wärme der Umhüllung (35) des Verflüssigers (34) wiederzugewinnen (23, 24) und/oder der zweiten Rohrleitung (5), um sie dem Behälter (2) wieder zuzuführen (25b).

10. System (0) nach einem der Ansprüche 1 bis 8, **dadurch gekennzeichnet, dass** die Heizvorrichtung des Weiteren eine Wärmepumpe (6) umfasst, wobei ein spezifischer Verflüssiger (11 b) am Reservoir (2) befestigt ist und ein spezifischer Verdampfer (78) sich im Inneren der Umhüllung (35) des Verflüssigers (34) befindet.

11. System (0) nach einem der Ansprüche 1 bis 10, **dadurch gekennzeichnet, dass** der Teil (3a) der ersten Rohrleitung (3), der der Umhüllung (35) des Verflüssigers (34) am nächsten liegt, mit der Längsachse (28) der Umhüllung (35) einen spitzen Winkel α bildet.

12. System (0) nach mindestens Anspruch 1, **dadurch gekennzeichnet, dass** das Grobvakuum durch die Austragspumpe (9) für nichtkondensierbare Gase des Verflüssigers (34) und/oder die Austragspumpe (10) für Kondensate gehalten wird.

13. System (0) nach einem der Ansprüche 1 bis 12, **dadurch gekennzeichnet, dass** das System (0) darüber hinaus einen Feuchtigkeitssensor (230) umfasst, der am Behälter (2) befestigt ist, wobei der Sensor mit einem Bedienelement verbunden ist, wobei das Bedienelement mit einem Motor (18), der die Drehwelle (17) betreibt, der/den Austragspumpe(n) und/oder der Umwälzpumpe (9, 10, 100), der Heizvorrichtung (11a) und der Wärmepumpe (6) verbunden ist, wobei das Bedienelement den Motor (18) der Drehwelle (17), die Heizvorrichtung (11a), die Austragspumpe(n) und/oder die Umwälzpumpe (9, 10, 100) und die Wärmepumpe (6) stoppt, wenn der Sensor in den Lebensmittelabfällen (4) einen Feuchtigkeitsgehalt nachweist, der kleiner ist als der minimale Feuchtigkeitsgehalt in dem Behälter (2).

14. System (0) nach einem der Ansprüche 1 bis 13, **dadurch gekennzeichnet, dass** das System (0) mindestens einen Drucksensor (231) in dem Behälter (2) und/oder der Umhüllung (35) des Verflüssigers (34) umfasst, wobei der oder die Sensoren (231) mit dem Bedienelement verbunden sind, wobei dasBedienelement mit mindestens einer Austragspumpe verbunden ist, wobei das Bedienelement das Funktionieren der Austragspumpe oder der Austragspumpen (9, 10) steuert, um das Grobvakuum des Systems (0) aufrechtzuerhalten und/oder die Kondensate (16) zu evakuieren.

15. System (0) nach einem der Ansprüche 1 bis 14, **dadurch gekennzeichnet, dass** der Behälter (2) eine Auslassöffnung (400) in einem dem Fußboden (30) am nächsten liegenden Bereich aufweist.

16. System (0) nach einem der Ansprüche 1 bis 15, **dadurch gekennzeichnet, dass** an der Drehwelle (17) Messer befestigt sind.

## Claims

1. Processing system (0) intended to dehydrate food waste (4) including at least:
- a device (200) for storage and heating of the food waste (4) comprising at least one device for agitation of the food waste (4) in a tank (2),
- a condenser (34),
- a first pipe (3) permitting direct communication between the storage device (200) and the condenser (34) to allow the passage of the gaseous effluents (22) including the water vapour produced in the device (200) for storage and heating via the food waste (4) to the condenser (34) in which the water vapour contained in the gaseous effluents condense,
the inside of the tank (2), the inside of the chamber (35) of the condenser (34) and the inside of the first pipe (3) are maintained under primary vacuum, the system (0) being **characterised in that** the condenser (34) is a condenser (34) by direct contact heat exchange having a chamber (35) comprising an opening (37) for extracting incondensable gases in the upper part of the condenser (34) and an opening (36) for extraction of the condensates in the lower part of the condenser (34).

2. System (0) according to claim 1, **characterised in that** the condenser (34) by direct contact heat exchange is a jet condenser (34) comprising the chamber (35) having a longitudinal axis (28) perpendicular to the ground (30), the chamber (35) comprising, in the upper part of the chamber (35), a shower device (33) comprising at least an opening for entry of cooling liquid (16) allowing the cooling liquid (16) to fall in a shower (13) in the chamber (35), from the upper part towards a lower part, the condensates composed of cooling liquid (16) with the addition of the water vapour condensed by the cooling liquid (16) being extracted through the opening for extraction of condensates, the first pipe (3) opening into the lower part of the chamber (35).

3. System (0) according to one of claims 1 and 2, **characterised in that** the opening (37) for extraction of incondensable gases from the condenser (34) is connected to a pump (9) for extraction of the incondensable gases and the opening (36) for extraction of the condensates being connected to a pump (10) for extraction of the condensates.

4. System (0) according to claim 2, **characterised in that** the shower device (33) communicates with the lower part of the chamber (35) of the condenser (34) through a second pipe (5), a part of the condensates being extracted from the lower part of the chamber (34) by a pump (100) for recirculation of the condensates to be channelled to the shower device (33) by this second pipe (5).

5. System (0) according to claim 1, **characterised in that** the device (200) for storage and heating of the waste further comprises:
- a tank (2) intended to contain the food waste (4) the shape of which is in part (2a) in the form of a sector of cylinder,
- a heating device (11) arranged against the wall of the tank (2) and intended to heat the food waste (4) contained in the tank (2).

6. System (0) according to claim 5, **characterised in that** the agitation device comprises at least:
- a rotation shaft (17) driven by a motor (18) and parallel with the longitudinal axis (32) of the part (2a) in the form of a sector of cylinder of the tank (2),
- a plurality of rods (20) one end of which is fixed to the rotation shaft (17),
- a plurality of vanes (19) fixed to the other end of the rods (20) in such a manner that the assembly formed by a rod (20) and a vane (19) extends from the rotation shaft (17) to the vicinity of the wall of the tank (2) in the form of a sector of cylinder.

7. System (0) according to claim 6, **characterised in that**
- the longitudinal axis (32) of the tank (2) is inclined relative to the ground (30) and **in that**
- each vane (19) is contained in a plane (38) forming an angle δ with the plane (39) comprising the rotation shaft (17) and the rod (20) onto which the vane (19) is fixed, the orientation of the angle δ being so selected that the food waste (4) intended to be treated in the system (0) is raised in the direction of the end of the rotation shaft (17) most distant from the ground (30) during treatment of the food waste (4).

8. System (0) according to one of claims 1 to 7, **characterised in that** the heating device comprises heating plates (11a) applied to the outer surface of the tank (2), the heating plates being temperature regulated by a control.

9. System (0) according to one of claims 1 to 8, **characterised in that** the heating device further comprises a heat pump (6) of which a specific condenser (11b) is fixed to the tank (2) and of which a specific evaporator (7, 8) is fixed onto the chamber (35) of the condenser (34) and/or onto the second pipe (5) to recover (23, 24) the heat from the chamber (35) of the condenser (34) and/or from the second pipe (5) for its return (25b) to the tank (2).

10. System (0) according to one of claims 1 to 8, **characterised in that** the heating device further comprises a heat pump (6) of which a specific condenser (11b) is fixed to the tank (2) and of which a specific evaporator (78) is inside the chamber (35) of the condenser (34).

11. System (0) according to one of claims 1 to 10, **characterised in that** the part (3a) of the first pipe (3) closest to the chamber (35) of the condenser (34) forms an acute angle α with the longitudinal axis (28) of the chamber (35).

12. System (0) according to at least claim 1, **characterised in that** the primary vacuum is maintained by the pump (9) for extraction of the incondensable gases from the condenser (34) and/or the pump (10) for extraction of the condensates.

13. System (0) according to one of claims 1 to 12, **characterised in that** the system (0) further comprises a humidity sensor (230) fixed in the tank (2), the sensor being connected to a control means, the control means being connected to the motor (18) driving the rotation shaft (17), the extraction and/or recirculation pump or pumps (9, 10, 100), the heating device (11a) and the heat pump (6), the control means stopping the motor (18) of the rotation shaft (17), the heating device (11a), the extraction and/or recirculation pump or pumps (9, 10, 100) and the heat pump (6) when the sensor detects a humidity level in the food waste (4) lower than a minimum humidity level value in the tank (2).

14. System (0) according to one of claims 1 to 13, **characterised in that** the system (0) comprises at least one pressure sensor (231) in the tank (2) and/or in the chamber (35) of the condenser (34), the sensor or sensors (231) being connected to the control means, the control means being connected to at least one extraction pump, the control means controlling the operation of the extraction pump or pumps (9, 10) to maintain the primary vacuum of the system (0) and/or evacuate the condensates (16).

15. System (0) according to one of claims 1 to 14, **characterised in that** the tank (2) has a discharge opening (400) in the part closest to the ground (30).

16. System (0) according to one of claims 1 to 15, **characterised in that** knives are fixed onto the rotation shaft (17).
